# EUROPEAN PATENT APPLICATION

(11) **EP 3 586 952 A1**
(43) Date of publication of application: **01.01.2020**
(21) Application number: 18180104.4
(22) Date of filing: 27.06.2018
(51) Int. Cl.: B01J 8/00, B01J 19/00

(54) **METHOD FOR MONITORING THE TEMPERATURE OF A CATALYST IN A CATALYTIC BED**

(71) Applicant: CASALE SA, 6900 Lugano (CH)
(72) Inventor: FILIPPI, Ermanno, 6976 Castagnola (CH)
(74) Representative: Zardi, Marco

(57) **Abstract**

A method for monitoring the temperature of a catalyst in a catalytic bed of a chemical reactor, comprising the use of at least one optical fiber sensor.

## Description

### Field of the invention

The invention relates to the monitoring of catalyst temperature in catalytic beds during operation of a catalytic reactor.

### Prior art

During operation of a catalytic reactor, overheating or overcooling of the catalyst contained in catalytic bed(s) may lead to deviation from the optimal temperature, which may result in a poor reaction yield and even in a damage of the catalyst. For example, in case of an exothermic reaction the catalyst, if not properly cooled, can be damaged by local overheating.

In order to optimize the reaction and to promptly detect any local deviation, an accurate measure of the temperature of the catalyst is desired.

According to the prior art, the temperature of the catalyst is measured using discrete temperature sensors like thermocouples.

Each thermocouple measures the catalyst temperature in a single point of a catalytic bed. In the prior art, more than one thermocouple is commonly used to monitor the temperature of the catalyst in more than one point of the catalytic bed(s).

However it is difficult to introduce said thermocouples directly in the catalytic bed(s) in the best position introducing each thermocouple independently, because they would require a passage through the side wall of the pressure vessel containing the catalytic bed(s). This is particularly true for radial flow reactors and, more in general, for reactors operating at high pressure and/or high temperature, wherein the presence of a nozzle on the side wall of the pressure vessel might cause mechanical failures. As a consequence, thermocouples are normally introduced from top of the pressure vessel, running for all its vertical length and forming bundles of several thermocouples.

Therefore, for practical reasons, the thermocouples normally used in a reactor cannot be more than 10 per catalytic bed, which is a small number relative to the size of most catalytic beds of interest in the field of chemical reactors. For example a catalytic radial bed may be up to 20 m high and in such a large catalytic bed the above small number of thermocouples is not able to provide an accurate profile of the temperature. It follows that, according to the prior art, the determination of the temperature distribution in a catalytic bed is very approximate and not satisfactory.

Additionally, said thermocouples are single sensing point units generally grouped in one or more sets and each of said sets is mounted in a respective thermowell. The thermowells, in order to contain several thermocouples, have a relatively large diameter, e.g. between 3 to 10 cm, more commonly between 4 to 7 cm.

Thermowells are basically tubular fittings which protect the thermocouples. As the thermocouples must be close to the catalyst in order to provide a reliable measure, the thermowells must be elongated bodies, essentially pipes, passing through several zones of the catalyst or, in the case of multi-bed converters, passing through several catalytic beds. As a consequence, the temperature along the thermowells varies of several degrees, e.g. even more than 100 °C.

The relatively large diameter of the thermowells and the different values of temperature along their length may cause convective motions of the gas inside the tubular fittings, which alter the temperature measures. As a consequence, the accuracy and reliability of said measures are not satisfactory. This is particularly true in the case of the reactors for the synthesis of ammonia from a hydrogen-containing synthesis gas.

The installation of said probes and the related thermowells is difficult and expensive and replacement of the thermowells may require a prolonged stop of the plant. Moreover, a retrofitting of a reactor by installation of one or more additional temperature probe(s) is quite difficult, since any newly-installed thermowell would require a passage through the pressure vessel and, if this is possible, in most cases, adding an aperture to the pressure vessel requires a new pressure testing.

### Summary of the invention

The aim of the invention is to solve the above drawbacks of the prior art.

The aim is reached with a method for monitoring the temperature of a catalyst in a catalytic bed of a chemical reactor according to claim 1. Said method comprises the use of at least one optical fiber sensor.

The method of the invention may include detecting a response of the optical fiber to an excitation signal and determining the temperature of one or more points in the optical fiber based on said response. Preferably, said excitation signal comprises laser pulses and said method comprises sending laser pulses into said at least one optical fiber sensor.

Preferably, said least one linear optical fiber sensor is made from quartz glass, which is a form of silicon dioxide (SiO₂) with amorphous solid structure.

According to a first embodiment of the invention, said at least one optical fiber sensor includes a plurality of sensing points distributed along a length of the sensor. In this embodiment the optical fiber sensor can be referred to as multi-point temperature sensor (MTS). The temperature sensing points are at predetermined locations on the optical fiber.

Preferably, said temperature sensing points are distributed at regular intervals along a length of said at least one optical fiber sensor, so that the temperature can be detected at said intervals. Said intervals are preferably of 5 cm to 1 meter and more preferably of 10 cm or about 10 cm.

Said sensing points can be obtained by a local modification of the index of refraction of the optical fiber. For example, each sensing point may include a short segment of the optical fiber subjected to Fiber Bragg Grating (FBG). In some embodiments, a temperature sensing point may include a gallium arsenide (GaAs) semiconductor crystal.

According to a second embodiment of the invention, said at least one optical fiber sensor is a linear sensor. In this embodiment, temperature is detected throughout the optical fiber and not at predetermined sensing points. An optical fiber sensor according to this embodiment is also referred to as distributed temperature sensor (DTS).

In a DTS embodiment, the invention includes determining the local temperature of the optical fiber at a plurality of locations in the fiber and as a function of the light transmission in the fiber. Said locations where the temperature is determined are spaced apart by intervals of preferably no more than 1 meter, preferably of 5 cm to 1 meter, more preferably of 10 cm or about 10 cm.

Based on at least one characteristic of light transmission in the fiber, the temperature of the optical fiber can be detected at a large number of locations in the fiber. Due to the short distance between said locations (e.g. 10 cm), an accurate profile of temperature is made available.

In some embodiments a temperature profile as a continuous function of a space coordinate (e.g. length in the optical fiber) can be obtained (e.g. by interpolation) based on the temperature detected at the above mentioned locations.

The method of determining the temperature as a function of the light transmission may include detecting at least one characteristic of light transmission by time domain reflectometry or frequency domain reflectometry. At least one characteristic of light transmission is selected which has a known relation to the temperature of the fiber and, therefore, the temperature of the fiber can also be determined.

The temperature of different locations in the optical fiber can be detected by processing the Raman scattering generated in the optical fiber sensor while laser light propagates through the fiber itself. Temperature locally changes the characteristics of scattered light in the fiber, thus allowing determination of the temperature along the optical fiber.

In all embodiments of the invention, a single optical fiber sensor can deliver the temperature of several locations along the optical fiber itself. Said measures can be advantageously repeated at prescribed time intervals, e.g. every few seconds.

Another object of the invention is a process for the synthesis of a chemical product in the presence of a catalyst in a catalytic bed, said process comprising a method of monitoring the temperature of said catalyst by at least one optical fiber sensor according to the above description.

A further object is a reactor for the catalytic synthesis of a chemical product comprising at least one catalytic bed containing a catalyst and at least one optical fiber sensor arranged to monitor the temperature of said catalyst. Said optical fiber sensor may be either a multi-point temperature sensor (MTS) or a distributed sensor (DTS) according to the above described embodiments.

Preferably, said at least one optical fiber sensor is mounted in a thermowell which is in contact with the catalyst. A thermowell is a tubular fitting protecting the optical fiber sensor contained therein.

Said thermowell preferably contains only one optical fiber sensor. Accordingly, said thermowell can have a small diameter, namely of few millimeters. For example the internal diameter of the thermowell is less than 30 mm. In a preferred embodiment, the internal diameter of the thermowell is 5 mm to 20 mm. A small diameter of the thermowell is advantageous because the convective motions of the gas inside the thermowell are minimized, as well as the interferences caused by said motions. As a consequence, the accuracy and the reliability of the temperature measures are increased.

A reactor according to the invention may comprise only one optical fiber sensor which advantageously extends in said at least one catalytic bed along its entire length. Accordingly, a unique sensor may provide a temperature profile of the entire catalytic bed.

In some embodiments, however, a reactor according to the invention may comprise several optical fiber sensors to further refine the temperature detection. Said optical fiber sensors, for example, may extend in different regions of the catalytic bed so as each of them detects the temperature of the catalyst over a certain area. Each of said optical fiber sensors is advantageously mounted in a respective thermowell, so that each thermowell contains only one optical fiber sensor. This embodiment is possible thanks to the small diameter of the thermowells so that even a great number of thermowells do not interfere with the operation of the reactor. A further advantageous feature is that said optical fiber sensors may pass through the reactor pressure vessel via a single nozzle, thus reducing the number of high pressure connections.

A reactor according to the invention may contain a plurality of catalytic beds arranged in series so that the effluent of a bed is further reacted in the subsequent bed. Said reactor may comprise one or more optical fiber sensors extending in one or more catalytic beds of said plurality.

In a preferred embodiment of multiple-bed reactor, said optical fiber sensor or at least one of the optical fiber sensors (when multiple optical fiber sensors are provided) extends in all the catalytic beds of said plurality.

The process and reactor according to the present invention are particularly suitable for the synthesis of ammonia and for the synthesis of methanol from a suitable hydrogen-containing make-up synthesis gas, which are exothermal catalytic processes.

Still another object of the invention is the retrofitting of an existing reactor, particularly of a reactor for the synthesis of ammonia or methanol, by installing at least one optical fiber sensor according to the attached claims. The at least one sensor used for retrofitting may be a MTS or DTS sensor according to the above described embodiments.

According to the present invention, temperatures over certain regions of the catalyst can be detected, thus allowing a control system to make a comparison between different regions of the catalyst.

In normal operation, the temperature should be uniform. A different temperature of different regions of catalyst, above a predetermined threshold, can be interpreted as a deviation from normal operation, for example a contamination or degradation of the catalyst. In some embodiments, said different temperature can be used to generate an alert signal or to modify the temperature at the bed inlet; in case of isothermal beds, it can be used to modify the amount of heat removed or provided, or to modify the temperature of the medium used to remove or provide heat.

The invention has the following advantages: precise and instantaneous temperature measurement during the process; measurement of the temperatures along the full length of the reactor and each catalyst bed, either every few centimeters or even continuous; less convective motions of the gas inside the thermowells thanks to their small diameter; less interferences caused by said convective motions, reliable and accurate temperature measurements, high repeatability of said measurements. Furthermore, the optical fiber sensors of the present invention are able to withstand harsh and corrosive environments. In addition, their cost is quite low and could be even lower than a traditional system with thermocouples.

## Claims

1. A method for monitoring the temperature of a catalyst in a catalytic bed of a chemical reactor, comprising the use of at least one optical fiber sensor.

2. A method according to claim 1, said at least one optical fiber sensor being a multi-point temperature sensor (MTS) including a plurality of sensing points.

3. A method according to claim 1, said at least one optical fiber sensor being a distributed temperature sensor (DTS).

4. A method according to claim 3, including the step of detecting the local temperature of the optical fiber at a plurality of locations in the fiber and as a function of the light transmission in the fiber.

5. A method according to claim 4, wherein said locations where the temperature is detected are spaced apart by intervals of no more than 1 meter, preferably of 5 cm to 1 meter, more preferably of 10 cm.

6. A method according to any of the previous claims, including the steps of: detecting a response of the optical fiber to an excitation signal and determining the temperature of one or more locations in the optical fiber based on said response.

7. A method according to claim 6, said excitation signal comprising laser pulses and said method comprising sending laser pulses into said at least one optical fiber sensor.

8. A process for the synthesis of a chemical product, preferably ammonia or methanol, in the presence of a catalyst in a catalytic bed, comprising monitoring the temperature of said catalyst with the method of any of claims 1 to 7.

9. A reactor for the catalytic synthesis of a chemical product, particularly for the synthesis of ammonia or methanol, comprising at least one catalytic bed containing a catalyst and at least one optical fiber temperature sensor arranged to monitor the temperature of said catalyst.

10. A reactor according to claim 9, said at least one optical fiber temperature sensor including any of a multi-point temperature sensor (MTS) or a distributed temperature sensor (DTS).

11. A reactor according to claim 9 or 10, wherein said at least one optical fiber sensor is mounted in a thermowell immersed in the catalyst, said thermowell being a tubular fitting, preferably having an internal diameter of 5 mm to 20 mm.

12. A reactor according to any of claims 9 to 11 comprising a plurality of catalytic beds containing a catalyst and arranged in series so that the effluent of a bed is further reacted in the subsequent bed, wherein said reactor comprises one or more optical fiber sensors extending in one or more catalytic beds of said plurality.

13. A reactor according to claim 12, wherein said optical fiber sensor, or at least one of several optical fiber sensors, extends in all the catalytic beds of said plurality.

14. A method for retrofitting a reactor for the synthesis of a chemical product, particularly for the synthesis of ammonia or methanol, said reactor comprising at least one catalytic bed containing a catalyst, the method comprising the installation of at least one optical fiber sensor adapted to monitor the temperature of said catalyst.

15. A method according to claim 14, wherein said reactor comprises a plurality of catalytic beds containing a catalyst and arranged in series so that the effluent of a bed is further reacted in the subsequent bed, the method comprising the installation of at least one optical fiber which extends in one or more catalytic beds of said plurality, preferably in all the catalytic beds of said plurality.
